# EUROPEAN PATENT APPLICATION

(11) **EP 3 211 496 A1**
(43) Date of publication of application: **30.08.2017**
(21) Application number: 16203973.9
(22) Date of filing: 14.12.2016
(51) Int. Cl.: G05B 19/05

(54) **PROGRAMMABLE CONTROLLER AND CONTROL PROGRAM OF PROGRAMMABLE CONTROLLER**

(30) Priority: 26.02.2016 JP 2016036445
(71) Applicant: OMRON CORPORATION, Kyoto-shi, Kyoto 600-8530 (JP)
(72) Inventor: YASUDA, Kei, Kyoto-shi, Kyoto 600-8530 (JP); YAOITA, Koji, Kyoto-shi, Kyoto 600-8530 (JP); KOJIMA, Tatsuya, Kyoto-shi, Kyoto 600-8530 (JP)
(74) Representative: Becker Kurig Straus

(57) **Abstract**

The present invention lowers possibility of producing a malfunction or an abnormity. A processor (2) receives a forwarding instruction of update data from an operation apparatus (10), determines whether the forwarding instruction is valid or invalid, and in a case in which the forwarding instruction is determined to be valid, forwards update data of a second memory (4) to a first memory (3) to update a user program.

## Description

### BACKGROUND OF THE INVENTION

### 1. Field of the Invention

The present invention relates to a programmable controller (programmable controller) (also referred to as a "PLC (Programmable Logic Controller, programmable logic controller)" in the below) and a control program (program) thereof.

### 2. Description of Related Art

In an apparatus disclosed in a patent document 1, a switch for a write instruction is included in a memory cassette corresponding to a second memory. By means of an operation of the switch for a write instruction, in the apparatus disclosed in the patent document 1, a user program (user program) stored in the memory cassette is written into a built-in memory of the PLC.

### Prior art documents

### Patent documents

Patent document 1: JP Patent Publication No. 2001-175309 gazette (publicized on June 29, 2001)

### SUMMARY OF THE INVENTION

### [Problems to be resolved by the present invention]

In an apparatus disclosed in the patent document 1, in order to write a user program stored in a memory cassette into a built-in memory of a PLC, the following mechanical operation on an apparatus needs to be performed. That is, the mechanical operation refers to disassembly and assembly of a memory cassette with respect to a PLC, operations of a switch for a write instruction, and the like.

A result thereof produces the following problem in the apparatus disclosed in the patent document 1: a malfunction or an abnormity caused by the mechanical operation is possibly produced. Specifically, it is considered that a wire possibly becomes loose resulting from that a body contacts a PLC in an operation process, or unexpected setting change is produced because operation content is wrong,

Especially, a PLC is usually accommodated inside a locked control panel in a state in which a second memory 2 is mounted. In this case, in the apparatus disclosed in the patent document 1, the mechanical operation necessarily further includes locking the control panel or taking the PLC out from the interior of the control panel. In this case, in the apparatus disclosed in the patent document 1, possibility of producing the malfunction or abnormity is further increased.

The present invention is completed in view of the problems, and an objective thereof is providing a programmable controller and a control program, which can lower possibility of producing a malfunction or an abnormity.

### [Technical means for resolving the problems]

To resolve the problems, a programmable (logical) controller of the present invention includes a processor, a first memory, and a second memory, where the first memory stores a user program, and the second memory stores update data of the user program and is built-in or removable, and the processor receives a forwarding instruction of the update data from an operation apparatus connected to the programmable controller, determines whether the forwarding instruction is valid or invalid, and in a case in which the forwarding instruction is determined to be valid, forwards the update data of the second memory to the first memory to update the user program.

According to the structure, only an end user of the programmable controller is used to operate the operation apparatus, and the programmable controller or components mounted on the programmable controller do not need to contact. Therefore, even if the programmable controller is accommodated inside the locked control panel, substantially, the update data stored in the second memory can be forwarded to the first memory without accompanying the mechanical operation of the end user. Therefore, possibility of producing a malfunction or an abnormity can be lowered according to the structure.

In addition, in the programmable controller of the present invention, preferably, the second memory is removable.

According to the structure, by means of the programmable controller of the present invention, disassembly and assembly operations of the second memory can be omitted when the update data is forwarded. Therefore, the programmable controller of the present invention can be more effectively used.

In addition, in the programmable controller of the present invention, preferably, the processor only uses the update data that is selected during input to the operation apparatus and that is stored in a specified area of the second memory as a forwarding object.

According to the structure, the update data can be selected to be forwarded.

In addition, in the programmable controller of the present invention, preferably, the processor compares a password input by the operation apparatus with a password attached to the update data, and when the two passwords are the same, determines that the forwarding instruction is valid.

According to the structure, the update data is forwarded only in a case in which a result of comparing the passwords is normal (the same). Therefore, security of forwarding of the update data can be improved.

In addition, in the programmable controller of the present invention, preferably, the processor discards the password input by the operation apparatus after comparing the two passwords.

According to the structure, the password can be input each time the update data is forwarded, or a new password is input in cooperation with change of the password attached to the update data. Therefore, security of forwarding of the update data can be further improved.

In addition, in the programmable controller of the present invention, preferably, the processor has a File Transfer Protocol (File Transfer Protocol, FTP) server (server) function and stores the update data sent from a terminal connected to the operation apparatus or the programmable controller to the second memory.

According to the structure, a programmable controller with high universality can be implemented.

In addition, in the programmable controller of the present invention, preferably, a system defined variable used for operating an interface of the programmable controlleris prepared in advance, and the forwarding instruction of the update data is performed by inputting a specified value to the system defined variable by the operation apparatus.

According to the structure, the specified value of the system defined variable is input by using the operation apparatus, so as to control forwarding according to the input specified value.

The programmable controller of the present invention can also be implemented by using a computer (computer). In this case, a control program used for making a computer function as a processor also belongs to the scope of the present invention.

### [Effects of the invention]

The present invention has the effect of lowering possibility of producing a malfunction or an abnormity.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Fig. 1 is a block diagram that illustrates having a structure of a system of a PLC of an implementation manner of the present invention.
Fig. 2 is a flowchart that illustrates an action process of a PLC shown in Fig.1.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

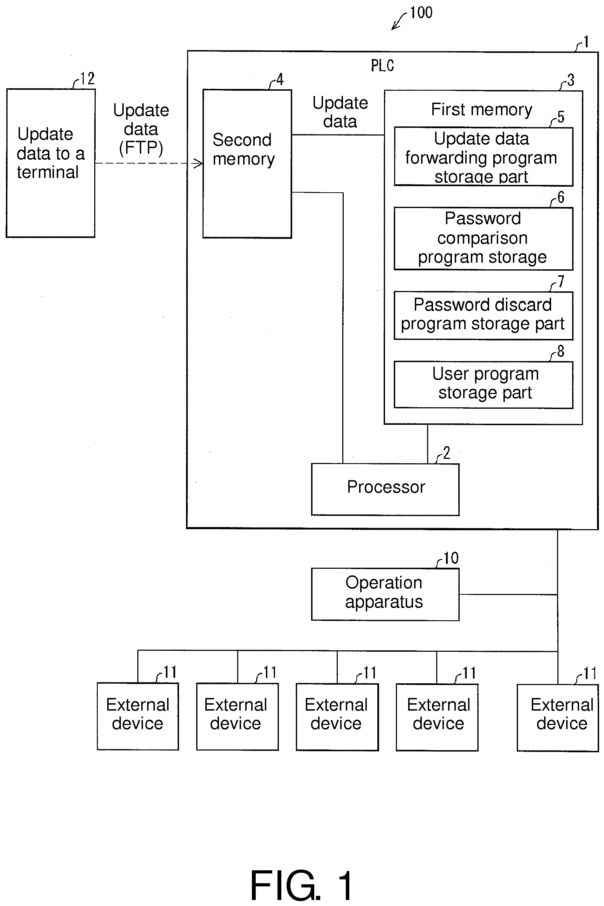

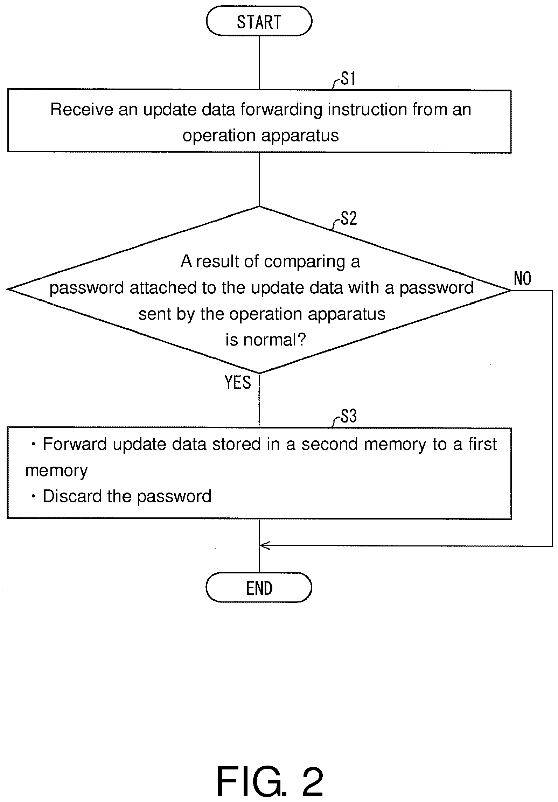

Forms for implementing the present invention are described with reference to Fig. 1 and Fig. 2. Fig. 1 is a block diagram that illustrates having a structure of a system 100 of a PLC 1 of an implementation manner. The PLC 1 includes a processor 2, a first memory 3, and a second memory 4. In addition, the PLC 1 is connected to an operation apparatus 10 and external devices 11 via a field network.

A user program stored in a user program storage part 8 of the first memory 3 is updated by using update data forwarded by the second memory 4 according to a forwarding instruction from the operation apparatus 10. The update data refers to, for example, a user program for update (which may also include an action setting of the PLC) or a current value of a variable related to the user program (a value of a variable that still keeps a value when a power source of the PLC is turned off (OFF)).

In the PLC 1, members served as a system defined variable Card1PrgTransferCmd (the forwarding instruction of the update data) include a system defined variable Exec (a flag that is set to be TRUE when the update data is forwarded), a system defined variable DirName (designating a directory name of the second memory 4 as a forwarding object), a system defined variable Password (designating a password for comparison when the update data is forwarded), a system defined variable TargetUserProgram (a flag that is set to be TRUE when the user program and various settings are used as forwarding objects during forwarding), a system defined variable TargetVariable (a flag that is set to be TRUE when a current value of a variable is used as a forwarding object during forwarding), a system defined variable CardlPrgTransferSta (displaying a forwarding state of the update data), and the like. In addition, the system defined variables refer to variables whose all attributes such as a name are predefined by using a system program of the PLC 1 and to which specific functions are allocated.

Specifically, values are input by the operation apparatus 10 to the members of the system defined variable Card1PrgTransferCmd, so as to perform the forwarding instruction of the update data on the PLC 1. That is, the system defined variable Exec is set to be TRUE. A storage place for the user program of a forwarding object is input to the system defined variable DirName. A password is input to the system defined variable Password. TRUE is input to the system defined variable TargetUserProgram. TRUE (using a current value of the variable as a forwarding object) or FALSE (not using a current value of the variable as a forwarding object) is input to the system defined variable TargetVariable.

In addition, a selection using or not using a system defined variable-based update data forwarding may be performed at the PLC 1 side. Therefore, when the update data is forwarded, "using the system defined variable-based update data forwarding" is preset at the PLC 1 side.

The processor 2 includes, for example, a central processing unit (CPU) (a central operation processing apparatus). Actions of the processor 2 are stated in the below.

The first memory 3 includes a built-in memory of the PLC 1. The first memory 3 includes an update data forwarding program storage part 5 for storing an update data forwarding program, a password comparison program storage part 6 for storing a password comparison program, and a password discard program storage part 7 for storing a password discard program. The update data forwarding program, the password comparison program, and the password discard program are described in the below in detail. In addition, the first memory 3 includes a user program storage part 8 for storing the user program.

The second memory 4 includes, for example, a secure digital (SD) card or another storage medium that can be mounted removably with respect to the PLC 1. Specifically, the second memory 4 can be removable with respect to the PLC 1 and can also be built in the PLC 1. Preferably, a storage capacity of the second memory 4 is greater than that of the first memory 3. Hence, information which is in larger amounts than information stored in the first memory 3 can be pre-stored to the second memory 4. The second memory 4 pre-stored update data sent by an update data supplying terminal 12, and the stored update data is forwarded by the processor 2 to the first memory 3.

The operation apparatus 10 displays states of the external devices 11, so that a user of the PLC 1, that is, an end user, can confirm various states of the external devices 11. In addition, the operation apparatus 10 includes, for example, a touch panel and can perform a remote operation-based instruction on the PLC 1 by touching the touch panel. The external devices 11 are control object devices of the PLC 1, and for example, are connected to the PLC 1 via a field net. The update data supplying terminal 12 pre-stores update data supplied by a manufacturer (for example, a vendor) of the user program. The update data can also be pre-stored in the operation apparatus 10.

The update data stored in the update data supplying terminal 12 or the operation apparatus 10 is sent to the second memory 4 for storing. For example, the PLC 1 has a File Transfer Protocol (File Transfer Protocol, FTP) server function and stores the update data sent by the update data supplying terminal 12 or the operation apparatus 10 in the second memory 4. Hence, the PLC 1 with high universality can be implemented. In addition, in the update data stored in the second memory 4, a password used for deciding whether the update data can be forwarded to the first memory 3 is further attached.

Fig. 2 is a flowchart that illustrates an action process of the PLC 1. First, step S1 of Fig. 2 is described.

In a state in which a power source of the PLC 1 is turned on (ON), the operation apparatus 10 is pressed down by using, for example, an icon (icon) displayed through the touch panel, and sends (inputs) an update data forwarding instruction to the PLC 1. That is, the PLC 1 receives the update data forwarding instruction from the operation apparatus 10. The update data forwarding instruction refers to an instruction indicating that the update data stored in the second memory 4 is forwarded to the first memory 3. The update data forwarding instruction includes a directory name indicating a storage area of the user program in the second memory 4 and a directory name indicating a storage area of a current value of a variable in the second memory 4. That is, in the update data forwarding instruction, values that are respectively written to cope with the variable "DirName", the variable "TargetUserProgram", and the variable "TargetVariable" are included. In the update data forwarding instruction, a password input by the operation apparatus 10 is further included, to be compared with a password attached to the update data. That is, in the update data forwarding instruction, a value written to cope with the variable "Password" is also included.

Afterwards, step S2 of Fig. 2 is described.

The processor 2 reads the password comparison program stored in the password comparison program storage part 6 according to the update data forwarding instruction sent by the operation apparatus 10. Then the processor 2 compares the password attached to the update data with the password included in the update data forwarding instruction sent by the operation apparatus 10 by using the password comparison program, and determines whether a comparison result is normal. As an example of determining, if the two passwords are the same, the comparison result is considered to be normal. If the two passwords are not the same, the comparison result can be considered to be abnormal. That is, in this case, whether the update data forwarding instruction is valid or invalid is determined.

In a case in which the comparison result is abnormal (a result of step S2 is NO), processing of the system 100 is finished. If the comparison result is normal (the result of step S2 is YES), forward to step S3. Afterwards, step S3 of Fig. 2 is described.

The processor 2 reads the update data forwarding program stored in the update data forwarding program storage part 5 according to the update data forwarding instruction sent by the operation apparatus 10. Then, the processor 2 switches, by using the update data forwarding program, a forwarding start flag set by the PLC 1 from FALSE (forwarding is not started) to TRUE (forwarding is started). Therefore, the processor 2 forwards the update data stored in the second memory 4 to the first memory 3. More specifically, the processor 2 forwards a user program, set values, and the like in a specified (designated by a system defined variable) directory stored in the second memory 4 to the user program storage part 8.

In addition, while the forwarding is performed, the processor 2 reads the password discard program stored in the password discard program storage part 7. Then, the processor 2 discards, by using the password discard program, the password sent by the operation apparatus 10.

According to the foregoing step S2 and step S3, the update data can be forwarded only in a case in which a comparison result of the passwords is normal. Therefore, security of forwarding of the update data can be improved.

In addition, according to the foregoing step S3, the password can be input by the operation apparatus 100 each time the update data is forwarded, or a new password is input by the operation apparatus 10 in cooperation with change of the password attached to the update data. Therefore, security of forwarding of the update data can be further improved.

Within a period of the foregoing step S1 to step S3, the end user only needs to operate the operation apparatus 10 and does not need to contact the PLC 1 or components mounted in the PLC 1. Therefore, even if the PLC 1 is accommodated inside the locked control panel, substantially, the PLC 1 can execute step S1 to step S3 without accompanying the mechanical operation of the end user. Therefore, possibility of producing a malfunction or an abnormity can be lowered according to the PLC 1 and according to the system 100.

The user program of the PLC 1 is updated by the update data sent to the first memory 3. According to the system 100, possibility of producing a malfunction or an abnormity can be lowered when the user program is forwarded to the first memory 3.

The system defined variables controlled by using the update data forwarding instruction are used to operate an interface of the PLC 1, and the update data forwarding instruction is performed by inputting values to the system defined variables in the operation apparatus 10. In other words, forwarding of the update data can be controlled by using the input values.

In this way, in the structure shown in Fig. 1, the update data is forwarded by the second memory 4 to the first memory 3 by inputting, by the operation apparatus 10, values to the system defined variables of the PLC 1. However, the structure is not limited thereto. For example, the following structure may also be used: the PLC 1 executes forwarding of the update data according to a specific command sent by the operation apparatus 10 to the PLC 1.

A control block (especially the processor 2) of the PLC 1 can be implemented by using a logic circuit (hardware) formed in an integrated circuit (an IC chip) and the like, and can also be implemented by using software by a central processing unit (CPU).

In the latter case, the PLC 1 has software for executing and implementing functions, that is, CPUs of commands of a program, and a computer (or a CPU) reads a read only memory (ROM) or a storage apparatus (which are referred to as "recording media") on which the program and data are recorded, a random access memory (RAM) that expands the program, and the like. In addition, the program is read and executed from the recording media by using a computer (or a CPU), so as to achieve the objective of the present invention. The recording media may use "non-temporary tangible media", such as a tape, a disk (disk), a card, a semiconductor memory, and a programmable logic circuit. In addition, the program may also be provided to the computer via any transmission medium (a communications network or a broadcast wave) that can transmit the program. In addition, the present invention can also be implemented in a form of a data signal that instantiates the program by electronic transmission and that is embedded into a carrier wave.

## Claims

1. A programmable controller (1), comprising a processor (2), a first memory (3), and a second memory (4), wherein the first memory (1) stores a user program, and the second memory (4) stores update data of the user program and is built-in or removable, and
the processor (2) receives a forwarding instruction of the update data from an operation apparatus (10) connected to the programmable controller (1), determines whether the forwarding instruction is valid or invalid, and when the forwarding instruction is determined to be valid, forwards the update data of the second memory (4) to the first memory (1) to update the user program.

2. The programmable controller (1) according to claim 1, wherein
the second memory (4) is removable.

3. The programmable controller (1) according to claim 1 or 2, wherein
the processor (2) only uses the update data that is selected during input to the operation apparatus (10) and that is stored in a specified area of the second memory (4) as a forwarding object.

4. The programmable controller (1) according to any one of claims 1 to 3, wherein
the processor (2) compares a password input by the operation apparatus (10) with a password attached to the update data, and when the password input by the operation apparatus (10) and the password attached to the update data are the same, determines that the forwarding instruction is valid.

5. The programmable controller (1) according to claim 4, wherein
the processor (2) discards the password input by the operation apparatus (10) after comparing the password input by the operation apparatus (10) with the password attached to the update data.

6. The programmable controller (1) according to any one of claims 1 to 5, wherein
the processor (2) has a File Transfer Protocol server function to store the update data sent from a terminal (12) connected to the operation apparatus (10) or the programmable controller (1) to the second memory (4).

7. The programmable controller (1) according to any one of claims 1 to 6, wherein
a system defined variable for operating an interface of the programmable controller (1) is prepared in advance, and
the forwarding instruction of the update data is performed by inputting a specified value to the system defined variable by the operation apparatus (10).

8. A control program of a programmable controller (1), wherein the programmable controller (1) comprises a processor (2), a first memory (3), and a second memory (4), the first memory (3) stores a user program, the second memory (4) stores update data of the user program and is built-in or removable, and the processor (1) executes the control program of the programmable controller (1) to perform the following steps:
receiving a forwarding instruction of the update data from an operation apparatus (10) connected to the programmable controller (1) and determining whether the forwarding instruction is valid or invalid; and
forwarding the update data of the second memory (4) to the first memory (3) to update the user program when the forwarding instruction is determined to be valid.
